# EUROPEAN PATENT APPLICATION

(11) **EP 3 671 594 A1**
(43) Date of publication of application: **24.06.2020**
(21) Application number: 19211165.6
(22) Date of filing: 25.11.2019
(51) Int. Cl.: G06Q 10/08

(54) **COMMUNICATING PROGRAM, COMMUNICATING DEVICE, AND COMMUNICATING METHOD**

(30) Priority: 21.12.2018 JP 2018239012
(71) Applicant: FUJITSU LIMITED, Kanagawa 211-8588 (JP)
(72) Inventor: Kawasaki, Takeshi, Kanagawa, 211-8588 (JP)
(74) Representative: Hoffmann Eitle

(57) **Abstract**

A program causing a computer within the communicating device to execute a process, the process comprising includes extracting requested attribute information indicated in an attribute information obtainment request from the third location from the second attribute information or the high frequency attribute information and returning the requested attribute information in a case where the requested attribute information is stored in the second storage section at a time of reception of the attribute information obtainment request from the third location, and transferring the attribute information obtainment request to the first communicating device in a case where the requested attribute information indicated in the attribute information obtainment request is not stored in the second storage section at the time of reception of the attribute information obtainment request from the third location.

## Description

### FIELD

The embodiments discussed herein are related to a storage medium, a communicating device, and a communicating method.

The embodiments discussed herein are related to a communicating program, a communicating device, and a communicating method.

### BACKGROUND

Attention has recently been directed to a technology of supply chain management in which a flow of a product from a raw material supplier to a consumer is regarded as one chain (supply chain), and total optimization is performed. The supply chain management realizes an improvement in efficiency and optimization of the whole process, and thereby a reduction in product management cost and the like, for example, become possible.

Meanwhile, there is traceability as one important system function in the supply chain management. Traceability is production history tracking for identifying an affecting range of a problem and minimizing damage when the problem occurs in a product.

In addition, tracing back (retrospective tracing) of traceability starts tracking from the shipped product to a raw material in order to identify the raw material or the like as a cause of the problem. Tracing back tracking a product may result in identifying a raw material causing a problem, a manufacturing line, a manufacturing date and time, and the like.

As a technology of traceability, a technology is, for example, proposed which performs data communication that transmits final management data related to processing of a final product to a downstream operator, and receives the final management data transmitted from an upstream operator.

In addition, a technology is proposed which stores a latest position of a traceability information processing device, the latest position being included in a message associated with identification information of an article, as preceding stage domain device positional information indicating the position of the traceability information processing device belonging to a domain in a stage immediately preceding a domain to which an own device belongs.

Further, a technology is proposed which displays or outputs traceability scheduled information on or to an upstream side terminal, the traceability scheduled information being input to a scheduled information input section provided to a downstream side terminal.

Disclosed as Related art are, for example, Japanese Laid-open Patent Publication No. 2006-341937, Japanese Laid-open Patent Publication No. 2007-264933, Japanese Laid-open Patent Publication No. 2008-265890, and the like.

### SUMMARY

### [TECHNICAL PROBLEM]

Each player of a supply chain manages, in a database, management information in an own manufacturing process, the identification information of a product, and the like, and performs tracing back based on the information retained in the database.

However, in tracing back, information about a product causing a problem is searched for by tracing the information stored in the database managed by each player upstream from downstream in order for all players of the supply chain. Therefore, obtainment of the desired information takes time, and a trace-back response delay time is increased.

In one aspect, it is an object of the present technology to provide a communicating program, a communicating device, and a communicating method that achieve shortening of a trace-back response delay time.

### [SOLUTION TO PROBLEM]

According to an aspect of the embodiment, a communicating program of a communicating device communicating attribute information of a product manufactured so as to include a manufacturing process from a first location to a second location and from the second location to a third location, the communicating program causing a computer within the communicating device to execute a process, the process includes when functioning as a first communicating device disposed at the first location, storing first attribute information of the product at the first location in a first storage section within the first communicating device, selecting, as high frequency attribute information from the first attribute information, attribute information having a request frequency equal to or higher than a threshold value, the request frequency being a frequency of requests from the second location or the third location, or attribute information that is storable within a range of capacity of an information transmitting medium and has a high request frequency, and writing the high frequency attribute information to the information transmitting medium attached to the product at the first location, and when functioning as a second communicating device disposed at the second location, storing second attribute information of the product at the second location in a second storage section within the second communicating device, reading the high frequency attribute information written to the information transmitting medium attached to the product and storing the high frequency attribute information in the second storage section, extracting requested attribute information indicated in an attribute information obtainment request from the third location from the second attribute information or the high frequency attribute information and returning the requested attribute information in a case where the requested attribute information is stored in the second storage section at a time of reception of the attribute information obtainment request from the third location, and transferring the attribute information obtainment request to the first communicating device in a case where the requested attribute information indicated in the attribute information obtainment request is not stored in the second storage section at the time of reception of the attribute information obtainment request from the third location.

### [ADVANTAGEOUS EFFECTS OF INVENTION]

According to one aspect, it is possible to shorten a trace-back response delay time.

### BRIEF DESCRIPTION OF DRAWINGS

FIG. 1 is a diagram of assistance in explaining a communicating device;
FIG. 2 is a diagram illustrating an example of operation in a case where an identification (ID) is attached to a product;
FIG. 3 is a diagram illustrating an example of a trace-back sequence;
FIG. 4 is a diagram illustrating an example of operation in a case where an ID and management information are attached to a product;
FIG. 5 is a diagram illustrating an example of a hardware configuration of a communicating device;
FIG. 6 is a diagram illustrating an example of functional blocks of a communicating device;
FIG. 7 is a diagram illustrating an example of a flow of generation and transmission of attribute information;
FIG. 8 is a diagram illustrating an example of a trace-back sequence;
FIG. 9 is a diagram illustrating an example of operation in a case where attribute information having a high request frequency is transmitted;
FIG. 10 is a diagram illustrating an example of a trace-back sequence;
FIG. 11 is a diagram illustrating an example of operation in a case where attribute information having a high request frequency is transmitted;
FIG. 12 is a diagram illustrating an example of a trace-back sequence;
FIG. 13 is a diagram illustrating an example of attribute information managing operation in a case where there is a capacity shortage in a DB;
FIG. 14 is a diagram illustrating an example of attribute information managing operation in a case where there is a capacity shortage in a DB;
FIG. 15 is a flowchart illustrating an example of attribute information generating operation;
FIG. 16 is a flowchart illustrating an example of trace-back operation;
FIG. 17 is a flowchart illustrating an example of trace-back operation; and
FIG. 18 is a flowchart illustrating an example of count control for the number of responses.

### DESCRIPTION OF EMBODIMENTS

Present embodiments will hereinafter be described with reference to the drawings.

### [First Embodiment]

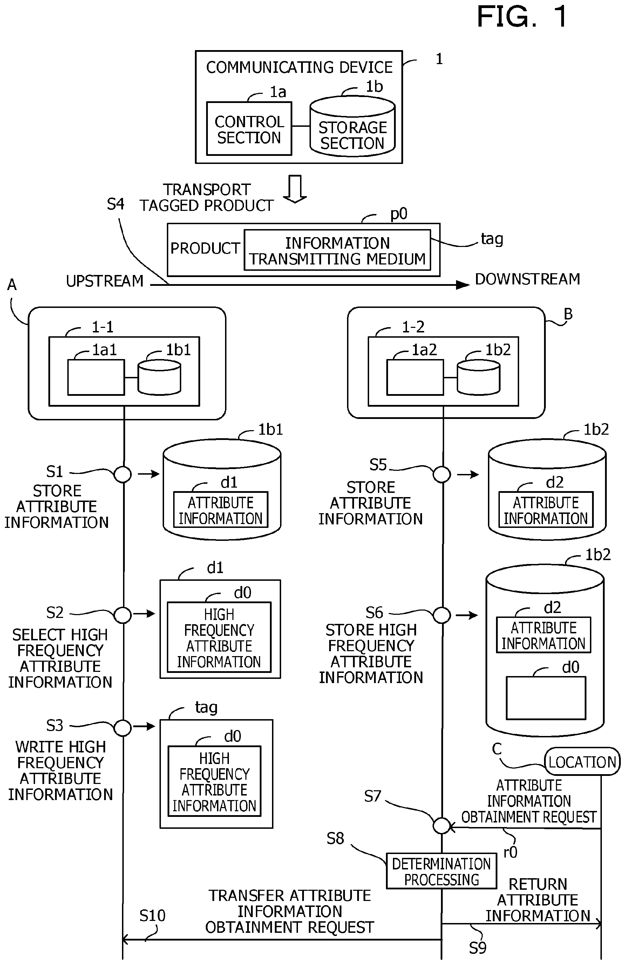

A first embodiment will be described with reference to FIG. 1. FIG. 1 is a diagram of assistance in explaining a communicating device. A communicating device 1 communicates attribute information of a product manufactured so as to include a manufacturing process from a first location to a second location and from the second location to a third location. The communicating device 1 includes a control section 1a and a storage section 1b.

The storage section 1b stores attribute information. The control section 1a performs first communication control in a case where the communicating device 1 is disposed at the first location, and performs second communication control in a case where the communicating device 1 is disposed at the second location.

In a case where the control section 1a performs the first communication control, the control section 1a stores first attribute information of the product in the manufacturing process of the first location in the storage section 1b, selects, as high frequency attribute information from the first attribute information, attribute information having a request frequency equal to or higher than a threshold value, the request frequency being a frequency of requests for the attribute information from the second location or the third location, or attribute information that is storable within a range of capacity of an information transmitting medium and has a high request frequency (has a request frequency equal to or higher than a threshold value), and writes the high frequency attribute information to the information transmitting medium attached to the product at the first location.

In a case where the control section 1a performs the second communication control, on the other hand, the control section 1a stores second attribute information of the product in the manufacturing process of the second location in the storage section 1b, reads the high frequency attribute information written to the information transmitting medium attached to the product delivered from the first location, and stores the high frequency attribute information in the storage section 1b.

In addition, in a case where the control section 1a performs the second communication control, the control section 1a receives an attribute information obtainment request from the third location, and extracts requested attribute information indicated in the attribute information obtainment request from the second attribute information or the high frequency attribute information and returns the requested attribute information when the requested attribute information is stored in the storage section 1b. Further, the control section 1a transfers the attribute information obtainment request to the communicating device disposed at the first location when the requested attribute information indicated in the attribute information obtainment request is not stored in the storage section 1b.

Operation will be described by using an example illustrated in FIG. 1. A communicating device 1-1 is disposed at a location A. The communicating device 1-1 includes a control section 1a1 and a storage section 1b1. A communicating device 1-2 is disposed at a location B. The communicating device 1-2 includes a control section 1a2 and a storage section 1b2. The communicating devices 1-1 and 1-2 communicate attribute information for managing a product in a flow of a manufacturing process from the location A to the location B.

[Step S1] The control section 1a1 stores attribute information d1 in a manufacturing process at the location A in the storage section 1b1.

[Step S2] The control section 1a1 selects, as high frequency attribute information d0 from the attribute information d1, attribute information having a request frequency equal to or higher than a threshold value, the request frequency being a frequency of requests for the attribute information from downstream, or attribute information that is storable within a range of capacity of an information transmitting medium and has a high request frequency.

[Step S3] The control section 1a1 writes the high frequency attribute information d0 to an information transmitting medium tag attached to a product p0 to be transported from the location A to the location B.

[Step S4] The product p0 is transported from the location A to the location B.

[Step S5] The control section 1a2 stores attribute information d2 in a manufacturing process at the location B in the storage section 1b2.

[Step S6] The control section 1a2 reads the high frequency attribute information d0 written to the information transmitting medium tag attached to the product p0 delivered from the location A, and stores the high frequency attribute information d0 in the storage section 1b2.

[Step S7] The control section 1a2 receives an attribute information obtainment request r0 from a location C downstream of the location B.

[Step S8] The control section 1a2 determines whether or not requested attribute information indicated in the attribute information obtainment request r0 is stored in the storage section 1b2. When the requested attribute information indicated in the attribute information obtainment request r0 is stored, the processing proceeds to step S9. When the requested attribute information indicated in the attribute information obtainment request r0 is not stored, the processing proceeds to step S10.

[Step S9] When the requested attribute information indicated in the attribute information obtainment request r0 is stored in the storage section 1b2, the control section 1a2 extracts the requested attribute information from the attribute information d2 or the high frequency attribute information d0, and returns the requested attribute information to a requesting source.

[Step S10] When the requested attribute information indicated in the attribute information obtainment request r0 is not stored in the storage section 1b2, the control section 1a2 transfers the attribute information obtainment request r0 to the communicating device 1-1 disposed at the location A.

As described above, the communicating device 1-1 located upstream transfers, in advance, the high frequency attribute information having a high request frequency to the communicating device 1-2 located downstream, and the communicating device 1-2 stores the high frequency attribute information. When the communicating device 1-2 receives a request to obtain the high frequency attribute information from downstream, the communicating device 1-2 may return the high frequency attribute information without tracing back to the communicating device 1-1 because the communicating device 1-2 itself stores the high frequency attribute information.

The control of such a communicating device 1 enables a response to a request to obtain attribute information to be made on a side closer to a downstream end, and enables a response delay time to be shortened for attribute information having a high request frequency.

### <Tracing Back>

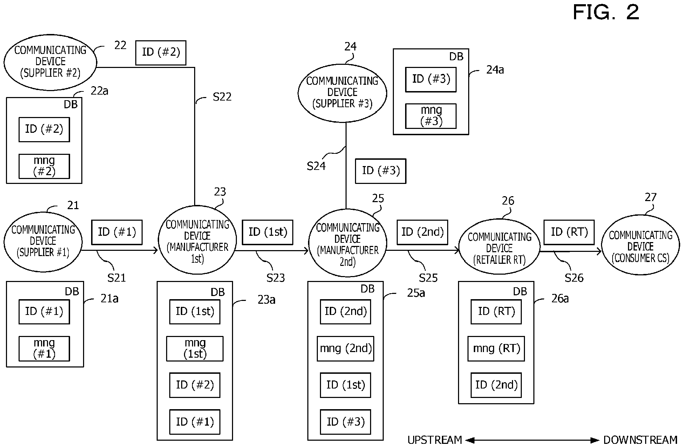

Before description is next made of a second embodiment, normal tracing back will be described with reference to FIGs. 2 to 4. When tracing back is performed, information for tracing management is attached. For example, there are a case where an ID (a serial number, a lot number, or the like) is attached as identification information to a product and a case where an ID and management information (a manufacturing location, a manufacturing date, a signature, or the like) are attached.

FIG. 2 is a diagram illustrating an example of operation in a case where an ID is attached to a product. In the figure, ID (P) is the ID of a product in a manufacturing process of a player P. mng (P) is management information of the product in the manufacturing process of the player P. Incidentally, in a flow of a supply chain from manufacturing of a product to reception of the product by a consumer, a supplier side is upstream, and a consumer side is downstream.

[Step S21] A communicating device 21 disposed on a supplier #1 side has a database (DB) 21a for tracing management. The DB 21a stores ID (#1) and mng (#1). The communicating device 21 attaches ID (#1) to a product. The product to which ID (#1) is attached is transported to a manufacturer 1st.

Incidentally, when information is attached to a product, an information transmitting medium such, for example, as a radio frequency (RF) tag, a bar code, or the like is used.

[Step S22] A communicating device 22 disposed on a supplier #2 side has a DB 22a for tracing management. The database 22a stores ID (#2) and mng (#2). The communicating device 22 attaches ID (#2) to a product. The product to which ID (#2) is attached is transported to the manufacturer 1st.

[Step S23] A communicating device 23 disposed on the manufacturer 1st side has a DB 23a for tracing management. The DB 23a stores ID (1st) and mng (1st). In addition, the communicating device 23 reads IDs (#1) and (#2) written to the information transmitting media of the delivered products, and stores IDs (#1) and (#2) in the DB 23a.

The manufacturer 1st manufactures a new product by processing the products sent from the suppliers #1 and #2. The communicating device 23 attaches ID (1st) to the product. The product to which ID (1st) is attached is transported to a manufacturer 2nd.

[Step S24] A communicating device 24 located on a supplier #3 side has a DB 24a for tracing management. The DB 24a stores ID (#3) and mng (#3). The communicating device 24 attaches ID (#3) to a product. The product to which ID (#3) is attached is transported to the manufacturer 2nd.

[Step S25] A communicating device 25 located on the manufacturer 2nd side has a DB 25a for tracing management. The DB 25a stores ID (2nd) and mng (2nd). In addition, the communicating device 25 reads IDs (1st) and (#3) written to the information transmitting media of the delivered products, and stores IDs (1st) and (#3) in the DB 25a.

The manufacturer 2nd manufactures a new product by processing the products sent from the supplier #3 and the manufacturer 1st. The communicating device 25 attaches ID (2nd) to the product. The product to which ID (2nd) is attached is transported to a retailer RT.

[Step S26] A communicating device 26 located on the retailer RT side has a DB 26a for tracing management. The DB 26a stores ID (RT) and mng (RT). In addition, the communicating device 26 reads ID (2nd) written to the information transmitting medium of the delivered product, and stores ID (2nd) in the DB 26a. The communicating device 26 attaches ID (RT) to the product sent from the manufacturer 2nd. The product to which ID (RT) is attached is transported to a consumer CS having a communicating device 27.

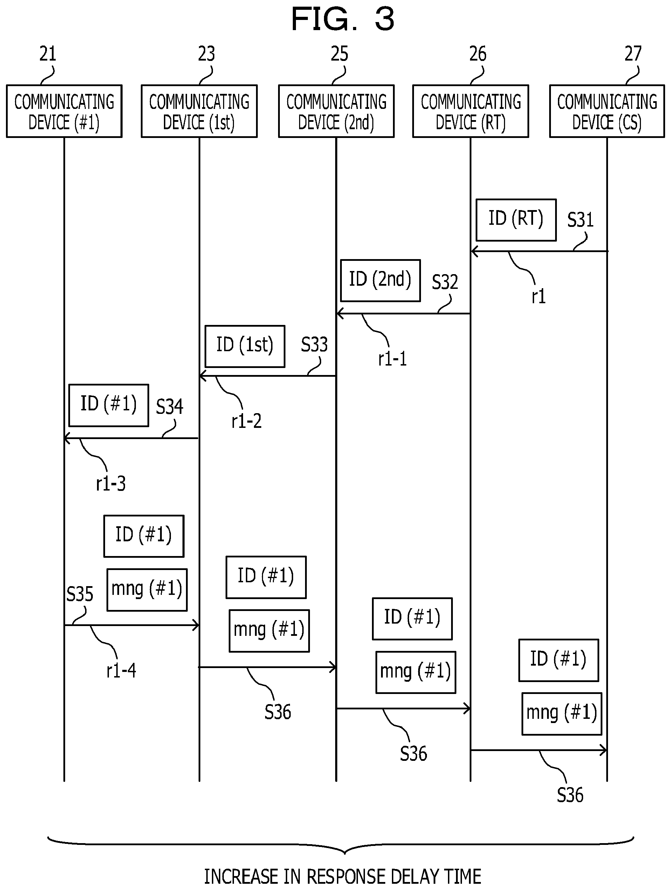

FIG. 3 is a diagram illustrating an example of a trace-back sequence. A trace-back flow up to obtainment of the information of ID (#1) and mng (#1) from ID (RT) illustrated in FIG. 2 is illustrated.

[Step S31] The communicating device 27 located on the consumer CS side generates an information request r1 including ID (RT) based on ID (RT) attached to the received product, that is, generates the information request r1 regarding the product, and transmits the information request r1 to the communicating device 26.

[Step S32] When the communicating device 26 receives the information request r1, the communicating device 26 extracts ID (2nd) associated with ID (RT) from the DB 26a. Then, the communicating device 26 generates an information request r1-1 including ID (2nd), and transmits the information request r1-1 to the communicating device 25.

[Step S33] When the communicating device 25 receives the information request r1-1, the communicating device 25 extracts ID (1st) associated with ID (2nd) from the DB 25a. Then, the communicating device 25 transmits an information request r1-2 including ID (1st) to the communicating device 23.

[Step S34] When the communicating device 23 receives the information request r1-2, the communicating device 23 extracts ID (#1) associated with ID (1st) from the DB 23a. Then, the communicating device 23 transmits an information request r1-3 including ID (#1) to the communicating device 21.

[Step S35] When the communicating device 21 receives the information request r1-3, the communicating device 21 extracts mng (#1) related to ID (#1) from the DB 21a. Then, the communicating device 21 transmits ID (#1) and mng (#1) to the communicating device 23.

[Step S36] ID (#1) and mng (#1) are transmitted from the communicating device 23 to the communicating device 27 via the communicating devices 25 and 26.

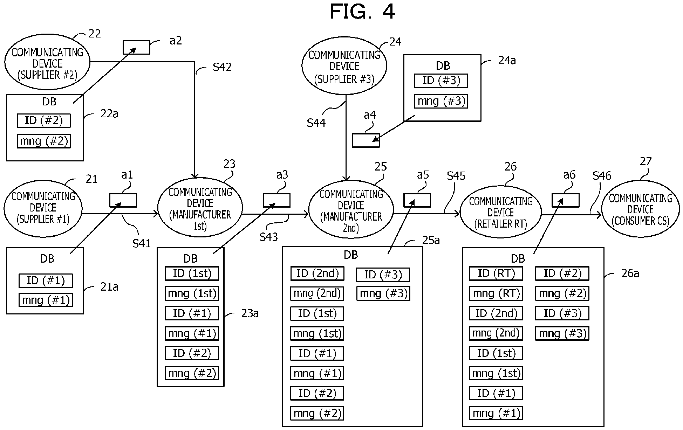

FIG. 4 is a diagram illustrating an example of operation in a case where an ID and management information are attached to a product.

[Step S41] The communicating device 21 generates information a1 including ID (#1) and mng (#1) stored in the DB 21a, and attaches the information a1 to a product. The product to which the information a1 is attached is transported to the manufacturer 1st.

[Step S42] The communicating device 22 generates information a2 including ID (#2) and mng (#2) stored in the DB 22a, and attaches the information a2 to a product. The product to which the information a2 is attached is transported to the manufacturer 1st.

[Step S43] The communicating device 23 generates information a3 including ID (1st), mng (1st), ID (#1), mng (#1), ID (#2), and mng (#2) stored in the DB 23a, and attaches the information a3 to a product. The product to which the information a3 is attached is transported to the manufacturer 2nd.

[Step S44] The communicating device 24 generates information a4 including ID (#3) and mng (#3) stored in the DB 24a, and attaches the information a4 to a product. The product to which the information a4 is attached is transported to the manufacturer 2nd.

[Step S45] The communicating device 25 generates information a5 including ID (2nd), mng (2nd), ID (1st), mng (1st), ID (#1), mng (#1), ID (#2), mng (#2), ID (#3), and mng (#3) stored in the DB 25a, and attaches the information a5 to a product. The product to which the information a5 is attached is transported to the retailer RT.

[Step S46] The communicating device 26 generates information a6 including ID (RT), mng (RT), ID (2nd), mng (2nd), ID (1st), mng (1st), ID (#1), mng (#1), ID (#2), mng (#2), ID (#3), and mng (#3). The information a6 is attached to the product. The product to which the information a6 is attached is transported to the consumer CS.

Here, in FIG. 2 and FIG. 3 described above, a player retains an ID attached to a product manufactured by the player itself and management information in the manufacturing process of the player itself in association with each other in the DB, and further retains and manages an ID attached to a transported product in the DB.

Then, at a time of tracing back, when a downstream player makes a request for information about a product together with an ID, each player refers to the DB and converts the ID into an ID obtained from an upstream player, and thereby the desired information is reached.

In such tracing back, the information stored in the DB managed by each player is traced upstream from downstream in order for all of the players of the supply chain. In addition, before a most upstream player having the desired information is reached, players intermediate between a player as an information requesting source and the most upstream player perform information transfer including ID conversion processing.

Therefore, a time taken to trace back is increased, and data traffic flowing on a communication network is increased, and further an amount of processing in each player is increased.

On the other hand, in FIG. 4, all of the information retained by each player is attached to the product and transmitted downstream from upstream, as described above. When such control is performed, the desired information may be obtained before the most upstream player is reached.

However, a product manufactured by a downstream player has more information attached to the product, and the storage capacity of the DB possessed by the player is increased. In addition, it is difficult to contain all of upstream information in an RF tag, a bar code, or the like as an information transmitting medium for attaching information to the product.

The present technology has been made in view of such points, and is to achieve shortening of a trace-back response delay time and achieve reductions in traffic on a communication network and processing loads on players.

### [Second Embodiment]

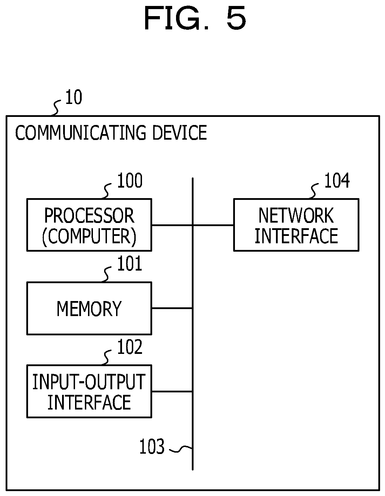

A second embodiment will next be described in detail in the following. FIG. 5 is a diagram illustrating an example of a hardware configuration of a communicating device. The whole of a communicating device 10 is controlled by a processor (computer) 100.

The processor 100 is coupled with a memory 101 and a plurality of peripheral devices via a bus 103. The processor 100 may be a multiprocessor. The processor 100 is, for example, a central processing unit (CPU), a micro processing unit (MPU), a digital signal processor (DSP), an application specific integrated circuit (ASIC), or a programmable logic device (PLD). In addition, the processor 100 may be a combination of two or more elements among the CPU, the MPU, the DSP, the ASIC, and the PLD.

The memory 101 is used as a main storage device of the communicating device 10. The memory 101 temporarily stores at least a part of an operating system (OS) program and an application program executed by the processor 100. In addition, the memory 101 stores various kinds of data needed for processing by the processor 100.

In addition, the memory 101 is also used as an auxiliary storage device of the communicating device 10, and stores the OS program, the application program, and various kinds of data. The memory 101 may include a semiconductor storage device such as a flash memory, a solid state drive (SSD), or the like or a magnetic recording medium such as a hard disk drive (HDD) or the like as the auxiliary storage device.

The peripheral devices coupled to the bus 103 include an input-output interface 102 and a network interface 104. The input-output interface 102 is coupled with a monitor (for example, a light emitting diode (LED), a liquid crystal display (LCD), or the like) that functions as a display device displaying the state of the communicating device 10 according to an instruction from the processor 100.

In addition, the input-output interface 102 may be coupled with an information input device such as a keyboard, a mouse, or the like. The input-output interface 102 transmits a signal sent from the information input device to the processor 100.

Further, the input-output interface 102 functions also as a communication interface for coupling a peripheral device. For example, the input-output interface 102 may be coupled with an optical drive device that reads data recorded on an optical disk by using laser light or the like. The optical disk includes a Blu-ray Disc (registered trademark), a compact disc read only memory (CD-ROM), a compact disc recordable (CD-R)/rewritable (RW), and the like.

In addition, the input-output interface 102 may be coupled with a memory device and a memory reader-writer. The memory device is a recording medium having a function of communicating with the input-output interface 102. The memory reader-writer is a device that writes data to a memory card or reads data from the memory card. The memory card is a card type recording medium.

The network interface 104 performs network communication interface control. For example, a network interface card (NIC), a wireless local area network (LAN) card, or the like may be used as the network interface 104. Data received by the network interface 104 is output to the memory 101 and the processor 100.

The hardware configuration as described above may implement processing functions of the communicating device 10. For example, the communicating device 10 may perform communication control according to the present technology by executing a respective given program by the processor 100.

The communicating device 10 implements the processing functions according to the present technology by executing a program recorded on a recording medium readable by a computer, for example. The program describing processing contents to be executed by the communicating device 10 may be recorded on various recording media.

For example, the program to be executed by the communicating device 10 may be stored in the auxiliary storage device. The processor 100 loads at least a part of the program within the auxiliary storage device into the main storage device, and executes the program.

In addition, the program may also be recorded on a portable recording medium such as an optical disk, a memory device, a memory card, or the like. The program stored on the portable recording medium becomes executable after being installed in the auxiliary storage device under control of the processor 100, for example. The processor 100 may also read the program directly from the portable recording medium and execute the program.

### <Functional Block>

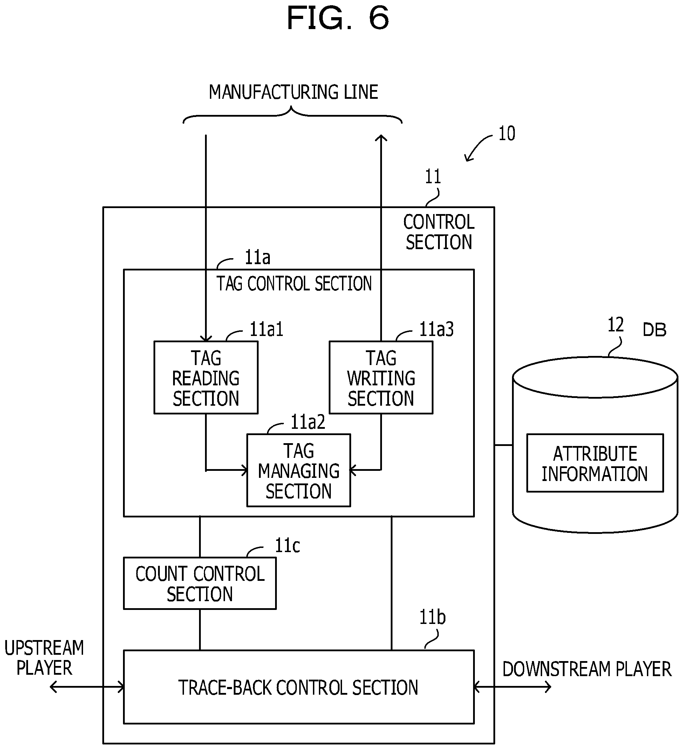

FIG. 6 is a diagram illustrating an example of functional blocks of a communicating device. The communicating device 10 includes a control section 11 and a DB 12. Incidentally, the control section 11 implements functions of the control sections 1a, 1a1, and 1a2 illustrated in FIG. 1, and the DB 12 implements functions of the storage sections 1b, 1b1, and 1b2 illustrated in FIG. 1.

The control section 11 includes a tag control section 11a, a trace-back control section 11b, and a count control section 11c. The tag control section 11a includes a tag reading section 11a1, a tag managing section 11a2, and a tag writing section 11a3.

The tag reading section 11a1 reads attribute information (identification information (id) of the part or the product and various kinds of management information, the identification information and the management information being used to trace back) written to a tag as an information transmitting medium attached to a product or a part flowing on a manufacturing line.

The tag managing section 11a2 retains and manages the attribute information read from the tag or attribute information to be written to the tag. The tag writing section 11a3 writes the attribute information to the tag.

The trace-back control section 11b performs reception control of requested attribute information transmitted from a downstream player. When the trace-back control section 11b receives the requested attribute information from the downstream player, the trace-back control section 11b generates new requested attribute information while converting the id attached to the part or the product.

The requested attribute information is information including an attribute about which an inquiry is made from the downstream player (requested attribute). The trace-back control section 11b performs transmission control of the requested attribute information to be transmitted to the upstream player.

In addition, the trace-back control section 11b performs reception control of response information transmitted from an upstream player (response to the requested attribute information), or generation of response information to be transmitted to the downstream player or transmission control of the response information.

The count control section 11c counts up attribute information requested from the downstream player or counts up the number of responses, and retains and manages a history of the number of counts. The DB 12 stores and manages the attribute information.

Incidentally, the control section 11 is implemented by the processor 100 in FIG. 5, and the DB 12 is implemented by the memory 101 in FIG. 5.

### <Operation of Communicating Device>

Operation of the second embodiment will next be described in detail by taking as an example a case where the functions of the present technology are applied to a supply chain of manufacturing a personal computer.

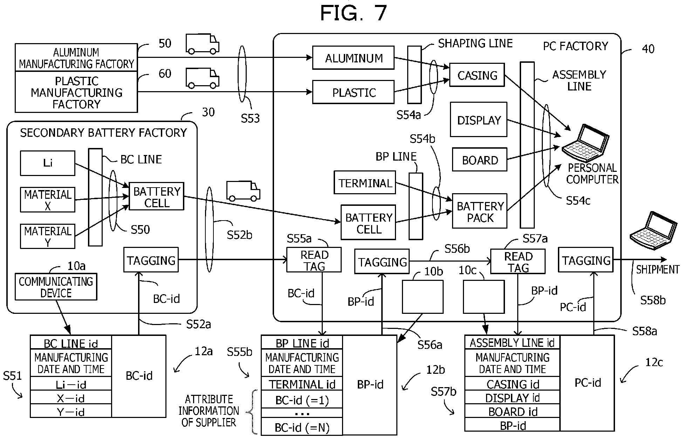

FIG. 7 is a diagram illustrating an example of a flow of generation and transmission of attribute information. A communicating device 10a within a secondary battery factory 30 has a DB 12a. In addition, a communicating device 10b within a PC factory 40 has a DB 12b, and a communicating device 10c within the PC factory 40 has a DB 12c.

[Step S50] In the secondary battery factory 30, a battery cell is manufactured on a battery cell (BC) manufacturing line (BC line).

[Step S51] At a time of manufacturing of the battery cell, the communicating device 10a within the secondary battery factory 30 generates BC-id (battery cell id), and stores BC-id in the DB 12a within the own device.

Also stored as information related to BC-id in the DB 12a within the own device are a BC line id (the manufacturing line id of the battery cell), a manufacturing date and time, and Li-id, X-id, and Y-id (material ids) as lot numbers of materials (Li (lithium), X, and Y) for the battery cell.

### [Step S52a] The communicating device 10a writes BC-id to a tag.

[Step S52b] The battery cell to which the tag having BC-id written thereto is attached is transported from the secondary battery factory 30 to the PC factory 40.

[Step S53] Aluminum for a casing is transported from an aluminum manufacturing factory 50 to the PC factory 40, and plastic for the casing is transported from a plastic manufacturing factory 60 to the PC factory 40.

[Step S54a] In the PC factory 40, the casing is manufactured from aluminum and plastic on a casing shaping line.

[Step S54b] In the PC factory 40, a battery pack is manufactured from a terminal and the battery cell on a battery pack (BP) manufacturing line (BP line).

[Step S54c] In the PC factory 40, a personal computer is assembled from the casing, a display, a board, and the battery pack on a personal computer assembly line.

[Step S55a] At a time of manufacturing of the battery pack, the communicating device 10b within the PC factory 40 reads BC-id from the tag attached to the battery cell, and generates BP-id (battery pack id).

[Step S55b] The communicating device 10b stores the generated BP-id in the DB 12b within the own device.

Information related to BP-id includes a BP line id (the manufacturing line id of the battery pack), the manufacturing date and time of the battery pack, and a terminal id as the lot number of the terminal mounted on the battery pack. Further, BC-id (= 1), ..., BC-id (= N) supplied from the secondary battery factory 30 are also stored as information related to BP-id in the DB 12b within the own device.

### [Step S56a] The communicating device 10b writes BP-id to a tag.

[Step S56b] The battery pack to which the tag having BP-id written thereto is attached is sent to the assembly line.

[Step S57a] At a time of assembly of the personal computer, the communicating device 10c within the PC factory 40 reads BP-id from the tag attached to the battery pack, and generates PC-id (personal computer id).

[Step S57b] The communicating device 10c stores the generated PC-id in the DB 12c.

Also stored as information related to PC-id in the DB 12c are an assembly line id, the manufacturing date and time of assembly of the personal computer, a casing id, a display id, a board id, and BP-id sent from the BP line side.

### [Step S58a] The communicating device 10c writes PC-id to a tag.

[Step S58b] The personal computer to which the tag having PC-id written thereto is attached is shipped.

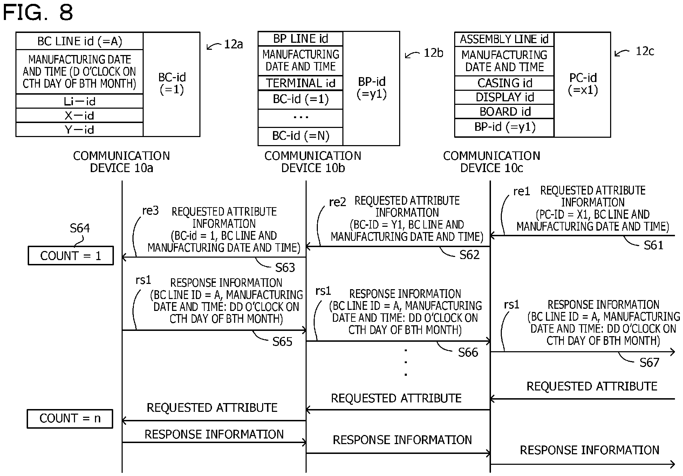

FIG. 8 is a diagram illustrating an example of a trace-back sequence. Suppose that requested attribute information including an inquiry about the BC line and manufacturing date and time of a battery cell mounted in a personal computer (PC-id = x1) is sent from a consumer, a store, or the like to the PC factory 40.

[Step S61] The communicating device 10c within the PC factory 40 receives requested attribute information re1 sent from the consumer, the store, or the like. The requested attribute information re1 includes PC-id = x1, and further includes requested attributes (inquiry items) of the BC line and the manufacturing date and time.

[Step S62] The communicating device 10c retrieves PC-id = x1 from the information stored in the DB 12c by using PC-id included in the requested attribute information re1 as a key. Then, the communicating device 10c obtains BP-id = y1 from the retrieved PC-id, generates requested attribute information re2, and transmits the requested attribute information re2 to the communicating device 10b.

The requested attribute information re2 includes BP-id = y1, and further includes the requested attributes of the BC line and the manufacturing date and time.

[Step S63] The communicating device 10b within the PC factory 40 retrieves BP-id = y1 from the information stored in the DB 12b by using BP-id included in the requested attribute information re2 as a key. Then, the communicating device 10b obtains BC-id = 1 from the retrieved BP-id, generates requested attribute information re3, and transmits the requested attribute information re3 to the communicating device 10a.

The requested attribute information re3 includes BC-id = 1, and further includes the requested attributes of the BC line and the manufacturing date and time.

[Step S64] The communicating device 10a within the secondary battery factory 30 retrieves BC-id = 1 from the information stored in the DB 12a by using BC-id included in the requested attribute information re3 as a key. Then, the communicating device 10a obtains a BC line id = A and a manufacturing date and time = D o'clock on a Cth day of a Bth month as the requested attributes from the retrieved BC-id = 1. In addition, the communicating device 10a counts the number of responses to the BP line and the number of responses of the manufacturing date and time.

[Step S65] The communicating device 10a generates response information rs1 including the BC line id = A and the manufacturing date and time = D o'clock on the Cth day of the Bth month, and transmits the response information rs1 to the communicating device 10b.

[Step S66] The communicating device 10b transmits the response information rs1 to the communicating device 10c.

[Step S67] The communicating device 10c transmits the response information rs1 to the consumer or the store as an inquiring source.

Tracing back is thereafter performed in a similar manner. Incidentally, at a time of tracing back, the number of responses of attribute information is counted as described above. When such count processing is performed, and when there are many inquiries about the BC line id and the manufacturing date and time, for example, the count values of the BC line id and the manufacturing date and time are larger than those of other attribute information. Thus, attribute information having a high request frequency may be recognized based on the count values.

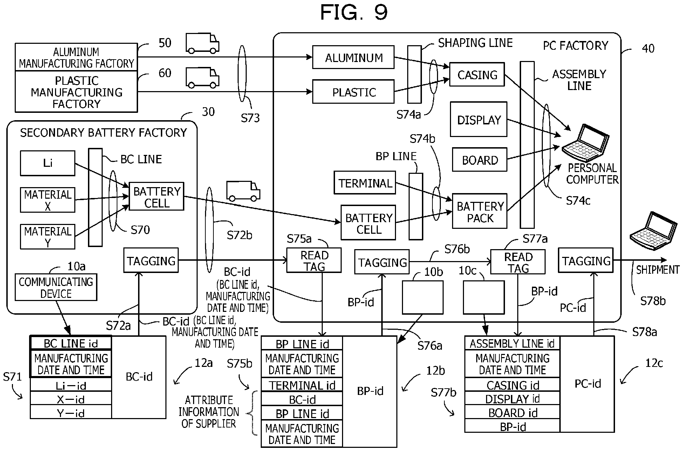

FIG. 9 is a diagram illustrating an example of operation in a case where attribute information having a high request frequency is transmitted. Suppose that the count values of the numbers of responses of attribute information of the BC line of battery cells and the manufacturing date and time are equal to or more than a threshold value, and that the communicating device 10a within the secondary battery factory 30 determines that the request frequencies of these pieces of attribute information are high. Alternatively, suppose that the communicating device 10a determines that the request frequency of an attribute storable within a range of capacity of the information transmitting medium and having a large count value is high.

[Step S70] A battery cell is manufactured on the BC line of battery cells in the secondary battery factory 30.

[Step S71] At a time of manufacturing of the battery cell, the communicating device 10a within the secondary battery factory 30 generates BC-id, and stores BC-id in the DB 12a within the own device.

The BC line id, a manufacturing date and time, and Li-id, X-id, and Y-id (material ids) are also stored as information related to BC-id in the DB 12a within the own device.

[Step S72a] The communicating device 10a writes the BC line id and the manufacturing date and time having high request frequencies in the attribute information of BC-id to a tag.

[Step S72b] The battery cell to which the tag having BC-id (the BC line id and the manufacturing date and time) written thereto is attached is transported from the secondary battery factory 30 to the PC factory 40.

[Step S73] Aluminum for a casing is transported from the aluminum manufacturing factory 50 to the PC factory 40, and plastic for the casing is transported from the plastic manufacturing factory 60 to the PC factory 40.

[Step S74a] In the PC factory 40, the casing is manufactured from aluminum and plastic on the casing shaping line.

[Step S74b] In the PC factory 40, a battery pack is manufactured from a terminal and the battery cell on the BP line of battery packs.

[Step S74c] In the PC factory 40, a personal computer is assembled from the casing, a display, a board, and the battery pack on the personal computer assembly line.

[Step S75a] At a time of manufacturing of the battery pack, the communicating device 10b within the PC factory 40 reads BC-id, the BC line id, and the manufacturing date and time from the tag attached to the battery cell, and generates BP-id.

[Step S75b] The communicating device 10b stores the generated BP-id in the DB 12b within the own device.

Also stored as information related to BP-id in the DB 12b within the own device are the BP line id, the manufacturing date and time and the terminal id of the battery pack as well as the BC line id and the manufacturing date and time (manufacturing date and time of the battery cell) delivered from the secondary battery factory 30.

### [Step S76a] The communicating device 10b writes BP-id to a tag.

[Step S76b] The battery pack to which the tag having BP-id written thereto is attached is sent to the assembly line.

[Step S77a] At a time of assembly of the personal computer, the communicating device 10c within the PC factory 40 reads BP-id from the tag attached to the battery pack, and generates PC-id.

[Step S77b] The communicating device 10c stores the generated PC-id in the DB 12c.

Stored as information related to PC-id in the DB 12c are the assembly line id, the manufacturing date and time of assembly of the personal computer, a casing id, a display id, a board id, and BP-id sent from the BP line side.

### [Step S78a] The communicating device 10c writes PC-id to a tag.

[Step S78b] The personal computer to which the tag having PC-id written thereto is attached is shipped.

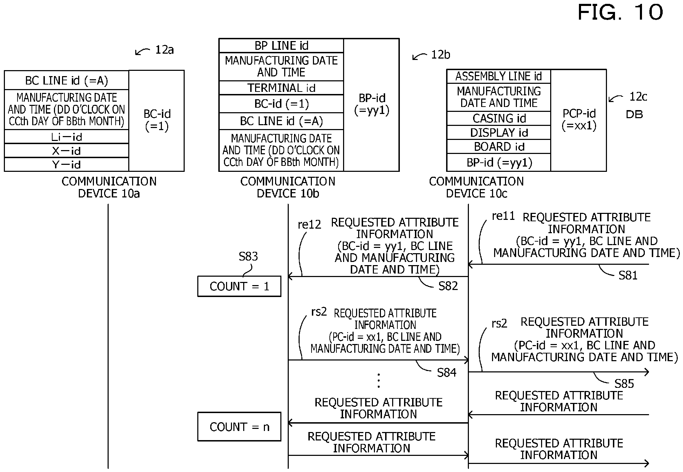

FIG. 10 is a diagram illustrating an example of a trace-back sequence. Suppose that requested attribute information including an inquiry about the BC line and the manufacturing date and time of a battery cell of a personal computer (PC-id = xx1) is sent from a consumer, a store, or the like to the PC factory 40.

[Step S81] The communicating device 10c within the PC factory 40 receives requested attribute information re11 sent from the consumer, the store, or the like. The requested attribute information re11 includes PC-id = xx1, and further includes the requested attributes of the BC line and the manufacturing date and time.

[Step S82] The communicating device 10c retrieves PC-id = xx1 from the information stored in the DB 12c by using PC-id included in the requested attribute information re11 as a key. Then, the communicating device 10c obtains BP-id = yy1 from the retrieved PC-id, generates requested attribute information re12, and transmits the requested attribute information re12 to the communicating device 10b.

The requested attribute information re12 includes BP-id = yy1, and further includes the requested attributes of the BC line and the manufacturing date and time.

[Step S83] The communicating device 10b within the PC factory 40 retrieves BP-id = yy1 from the information stored in the DB 12b by using BP-id included in the requested attribute information re12 as a key. Then, the communicating device 10b obtains BC-id = 1 from the retrieved BP-id, and obtains the BC line id = A and the manufacturing date and time = DD o'clock on a CCth day of a BBth month as the requested attributes from the retrieved BC-id. In addition, the communicating device 10b counts the number of responses to the BP line and the number of responses of the manufacturing date and time.

[Step S84] The communicating device 10b generates response information rs2 including the BC line id = A and the manufacturing date and time = DD o'clock on the CCth day of the BBth month, and transmits the response information rs2 to the communicating device 10c.

[Step S85] The communicating device 10c transmits the response information rs2 to the consumer or the store as an inquiring source.

Incidentally, when the communicating device 10b counts the number of responses in the processing of step S83, the communicating device 10b notifies a count result to the upstream communicating device 10a. Then, the communicating device 10a adds the notified number of responses to the own number of responses, and retains a result of the addition as a count history to use the count history for request frequency determination processing in the communicating device 10a.

As described above, the communicating device 10a located upstream transfers, in advance, attribute information (the BC line id and the manufacturing date and time) having a high request frequency to the communicating device 10b located downstream. When the communicating device 10b receives a request to obtain the attribute information from downstream, the communicating device 10b itself stores the BC line id and the manufacturing date and time, and may thus respond without tracing back to the communicating device 10a. It is therefore possible to shorten a response delay time for attribute information having a high request frequency.

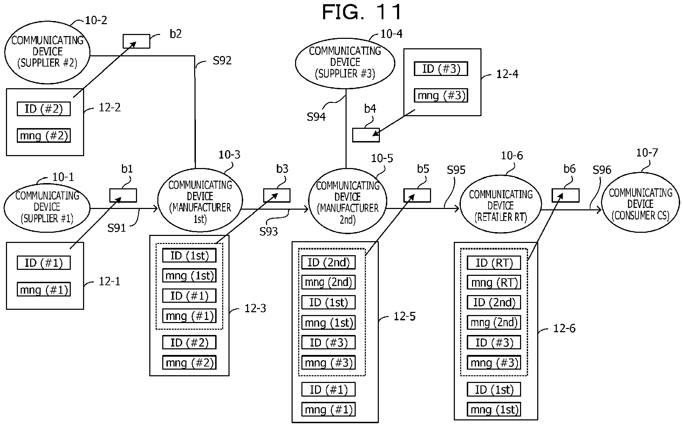

Operation will next be further described by taking as an example a case where there are a larger number of players. FIG. 11 is a diagram illustrating an example of operation in a case where attribute information having a high request frequency is transmitted.

[Step S91] A communicating device 10-1 generates information b1 including ID (#1) and mng (#1) stored in a DB 12-1, and attaches the information b1 to a product. The product to which the information b1 is attached is transported to the manufacturer 1st.

[Step S92] A communicating device 10-2 generates information b2 including ID (#2) and mng (#2) stored in a DB 12-2, and attaches the information b2 to a product. The product to which the information b2 is attached is transported to the manufacturer 1st.

[Step S93] A communicating device 10-3 stores ID (1st), mng (1st), ID (#1), mng (#1), ID (#2), and mng (#2) in a DB 12-3. In addition, the communicating device 10-3 selects ID (1st), mng (1st), ID (#1), and mng (#1) as attribute information having a request frequency equal to or higher than a threshold value or attribute information that is storable within a range of capacity of the information transmitting medium and has a high request frequency. The communicating device 10-3 generates information b3 including the selected attribute information. The information b3 is attached to a product. The product to which the information b3 is attached is transported to the manufacturer 2nd.

[Step S94] A communicating device 10-4 generates information b4 including ID (#3) and mng (#3) stored in a DB 12-4, and attaches the information b4 to a product. The product to which the information b4 is attached is transported to the manufacturer 2nd.

[Step S95] A communicating device 10-5 stores ID (2nd), mng (2nd), ID (1st), mng (1st), ID (#3), mng (#3), ID (#1), and mng (#1) in a DB 12-5.

In addition, the communicating device 10-5 selects ID (2nd), mng (2nd), ID (1st), mng (1st), ID (#3), and mng (#3) as attribute information having a request frequency equal to or higher than the threshold value or attribute information that is storable within the range of capacity of the information transmitting medium and has a high request frequency. The communicating device 10-5 generates information b5 including the selected attribute information. The information b5 is attached to a product. The product to which the information b5 is attached is transported to the retailer RT.

[Step S96] A communicating device 10-6 stores ID (RT), mng (RT), ID (2nd), mng (2nd), ID (#3), mng (#3), ID (1st), and mng (1st) in a DB 12-6.

In addition, the communicating device 10-6 selects ID (RT), mng (RT), ID (2nd), mng (2nd), ID (#3), and mng (#3) as attribute information having a request frequency equal to or higher than the threshold value or attribute information that is storable within the range of capacity of the information transmitting medium and has a high request frequency. The communicating device 10-6 generates information b6 including the selected attribute information. The information b6 is attached to the product. The product to which the information b6 is attached is transported to the consumer CS.

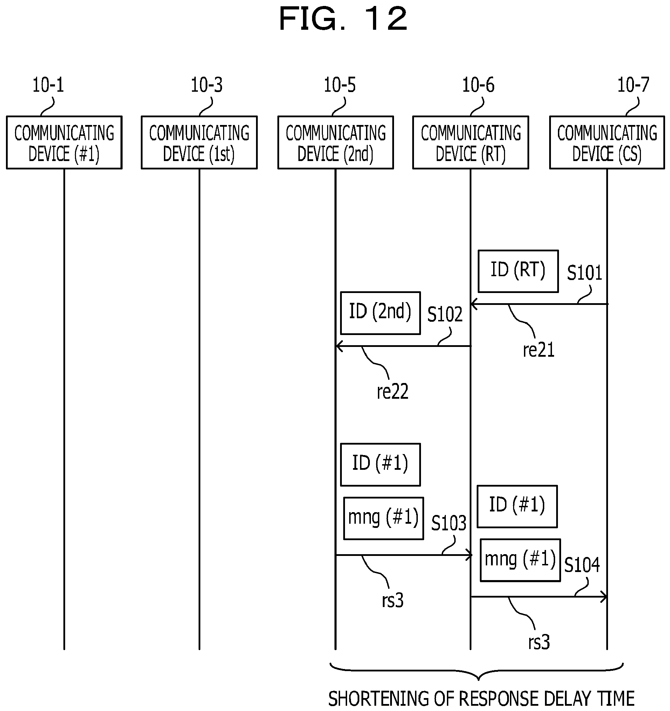

FIG. 12 is a diagram illustrating an example of a trace-back sequence. A trace-back flow up to obtainment of the attribute information of ID (#1) and mng (#1) from ID (RT) illustrated in FIG. 11 is illustrated.

[Step S101] A communicating device 10-7 located on the consumer CS side generates requested attribute information re21 including ID (RT) attached to the received product, and transmits the requested attribute information re21 to the communicating device 10-6.

[Step S102] When the communicating device 10-6 receives the requested attribute information re21, the communicating device 10-6 extracts ID (2nd) associated with ID (RT) from the DB 12-6. Then, the communicating device 10-6 generates requested attribute information re22 including ID (2nd), and transmits the requested attribute information re22 to the communicating device 10-5.

[Step S103] When the communicating device 10-5 receives the requested attribute information re22, the communicating device 10-5 extracts ID (#1) and mng (#1) associated with ID (2nd) from the DB 12-5. Then, the communicating device 10-5 generates response information rs3 including ID (#1) and mng (#1), and transmits the response information rs3 to the communicating device 10-6 (count processing for ID (#1) and mng (#1) is not illustrated).

[Step S104] The communicating device 10-6 transmits the response information rs3 to the communicating device 10-7.

Thus, a communicating device transfers attribute information having a high request frequency in advance. Therefore, when a request to obtain this attribute information from downstream is received, procedures for tracing back upstream may be decreased, and a response delay time for the attribute information having a high request frequency may be shortened.

<Management of Attribute Information in Case where There is Capacity Shortage>

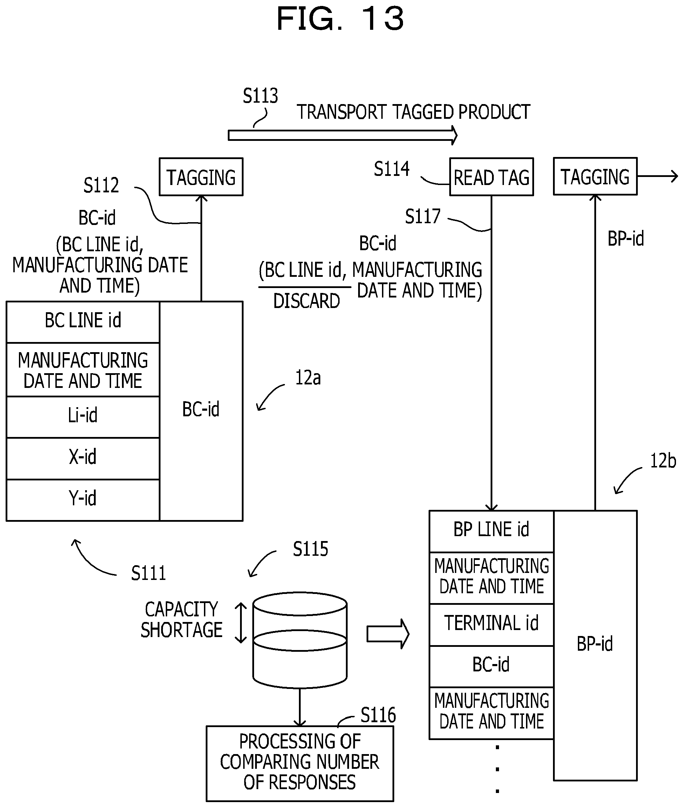

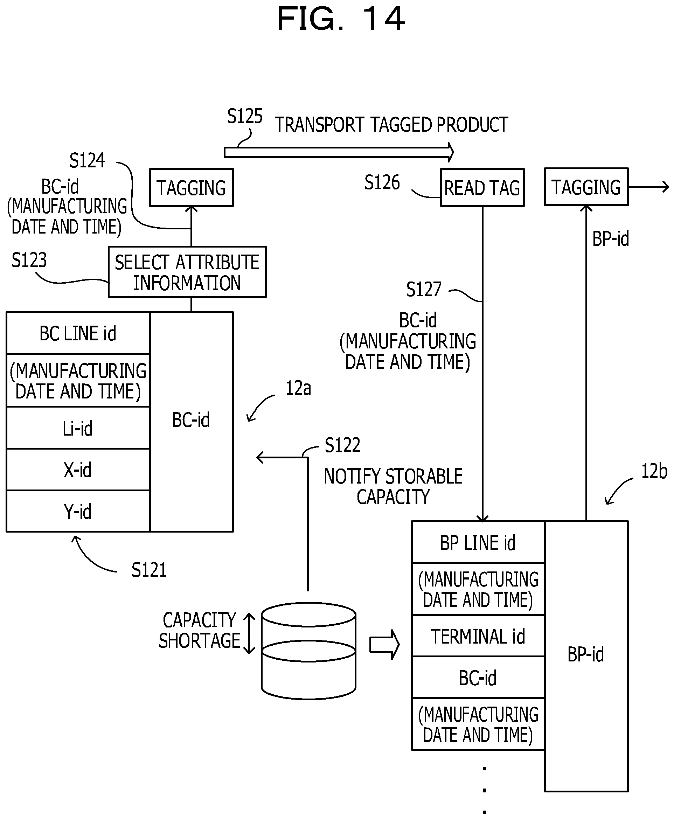

Referring to FIG. 13 and FIG. 14, description will next be made of management and control of attribute information in a case where there is a capacity shortage in a DB. FIG. 13 is a diagram illustrating an example of attribute information managing operation in a case there is a capacity shortage in a DB.

[Step S111] At a time of manufacturing of the battery cell, the communicating device 10a generates BC-id, and stores BC-id in the DB 12a within the own device.

BC-id includes the BC line id, a manufacturing date and time, and Li-id, X-id, and Y-id (material ids).

[Step S112] The communicating device 10a writes, to a tag, the BC line id and the manufacturing date and time as attribute information having a request frequency equal to or higher than the threshold value or attribute information that is storable within the range of capacity of the information transmitting medium and has a high request frequency in the attribute information of BC-id.

[Step S113] The battery cell to which the tag having BC-id (the BC line id and the manufacturing date and time) written thereto is attached is transported.

[Step S114] At a time of manufacturing of the battery pack, the communicating device 10b located at a transportation destination reads BC-id (the BC line id and the manufacturing date and time) from the tag attached to the battery cell.

[Step S115] The communicating device 10b detects that the storage capacity of the DB 12b is lower than a threshold value, and that there is thus a capacity shortage.

[Step S116] For the BC line id and the manufacturing date and time read from BC-id, the communicating device 10b compares the number of responses of the BC line id and the number of responses of the manufacturing date and time with each other, and detects that the number of responses of the BC line id is smaller.

[Step S117] The communicating device 10b discards the information of the BC line id, and generates BP-id including the manufacturing date and time.

The attribute information of BP-id includes the BP line id, the battery pack manufacturing date and time of the battery pack, and the terminal id. The attribute information of BP-id further includes BC-id including the manufacturing date and time (the manufacturing date and time of the battery cell).

Thus, when the communicating device 10b detects a capacity shortage in the DB 12b, the communicating device 10b discards attribute information whose number of responses is smaller, and stores attribute information whose number of responses is larger in the DB 12b. Thus, even when a capacity shortage in the DB 12b is detected, the attribute information having a higher request frequency may be retained on the downstream side, so that a response delay time may be shortened.

FIG. 14 is a diagram illustrating an example of attribute information managing operation in a case where there is a capacity shortage in a DB.

[Step S121] At a time of manufacturing of the battery cell, the communicating device 10a generates BC-id, and stores BC-id in the DB 12a within the own device.

The BC line id, a manufacturing date and time, and Li-id, X-id, and Y-id (material ids) are also stored as attribute information of BC-id in the DB 12a within the own device.

[Step S122] When the communicating device 10b detects that the capacity of the DB 12b is lower than the threshold value, and that there is thus a capacity shortage, the communicating device 10b notifies the communicating device 10a of a storable capacity.

[Step S123] The communicating device 10a detects the BC line id and the manufacturing date and time having high request frequencies in the attribute information of BC-id. However, the communicating device 10a selects the manufacturing date and time having a higher request frequency than the BC line id based on the storable capacity transmitted from the communicating device 10b.

[Step S124] The communicating device 10a writes the manufacturing date and time in the attribute information of BC-id to a tag.

[Step S125] The battery cell to which the tag having BC-id (manufacturing date and time) written thereto is attached is transported.

[Step S126] At a time of manufacturing of the battery pack, the communicating device 10b located at a transportation destination reads BC-id (manufacturing date and time) from the tag attached to the battery cell.

[Step S127] The communicating device 10b generates BP-id including the manufacturing date and time.

The BP line id, the manufacturing date and time of the battery pack, and the terminal id are included as the attribute information of BP-id stored in the DB 12b. Further, BC-id including the supplied manufacturing date and time (the manufacturing date and time of the battery cell) is included as the attribute information of BP-id.

Thus, when the communicating device 10b detects a capacity shortage in the DB 12b, the communicating device 10b notifies the storable capacity to the upstream communicating device 10a. Receiving the notification, the communicating device 10a selects attribute information to be written to the tag based on the storable capacity. Thus, even when a capacity shortage in the DB 12b is detected, attribute information having a higher request frequency may be retained on the downstream side, so that a response delay time may be shortened.

Incidentally, when the data-stored area of the DB 12b is in a first range from a first threshold value inclusive to a second threshold value (larger than the first threshold value) exclusive, the communicating device 10b notifies the upstream side of the storable capacity obtained by subtracting the data-stored area from the whole storage area of the DB 12b, and allows attribute information to be selected on the upstream side. In addition, when the data-stored area is in a second range equal to or larger than the second threshold value (when the capacity shortage is larger than the first range), control may also be performed which discards given attribute information on the communicating device 10b side.

### <Flowcharts>

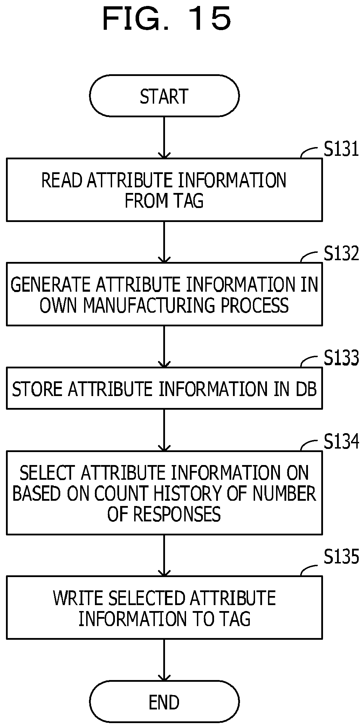

Operation of the communicating device 10 will next be described with reference to flowcharts of FIGs. 15 to 18.

FIG. 15 is a flowchart illustrating an example of attribute information generating operation.

[Step S131] The control section 11 reads attribute information from a tag attached to a product transported from an upstream player.

[Step S132] The control section 11 generates attribute information in an own manufacturing process.

[Step S133] The control section 11 stores the attribute information read from the tag and the attribute information in the own manufacturing process in the DB 12.

[Step S134] The control section 11 selects attribute information for transfer to a downstream player based on a count history of the number of responses.

[Step S135] The control section 11 writes the selected attribute information to a tag of a product.

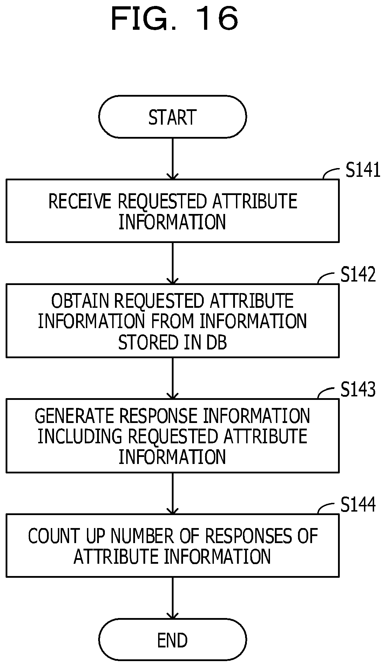

FIG. 16 is a flowchart illustrating an example of trace-back operation. The trace-back operation is performed in a case where attribute information requested from a downstream player is retained by the communicating device 10 receiving the request.

[Step S141] The control section 11 receives requested attribute information (a product id and attribute information being requested) transmitted from the downstream player.

[Step S142] The control section 11 obtains the requested attribute information from the information stored in the DB 12.

[Step S143] The control section 11 generates response information including the requested attribute information, and transmits the response information to the downstream player.

[Step S144] The control section 11 counts up the number of responses of the attribute information requested from the downstream player.

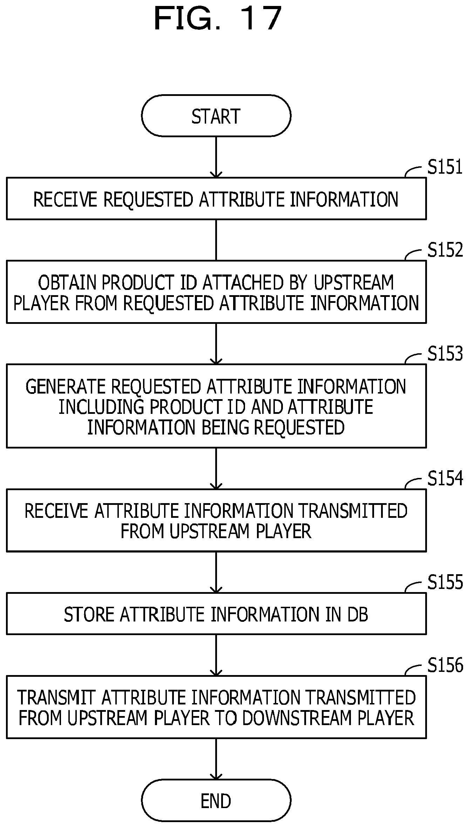

FIG. 17 is a flowchart illustrating an example of trace-back operation. The trace-back operation is performed in a case where attribute information requested from a downstream player is not retained by the communicating device 10 receiving the request.

[Step S151] The control section 11 receives requested attribute information (a product id and attribute information being requested) transmitted from the downstream player.

[Step S152] The control section 11 obtains a product id attached on an upstream player side from the requested attribute information.

[Step S153] The control section 11 generates requested attribute information including the product id and the attribute information being requested, and transmits the requested attribute information to the upstream player.

[Step S154] The control section 11 receives attribute information transmitted from the upstream player.

[Step S155] The control section 11 stores the received attribute information in the DB 12.

[Step S156] The control section 11 transmits the attribute information transmitted from the upstream player to the downstream player.

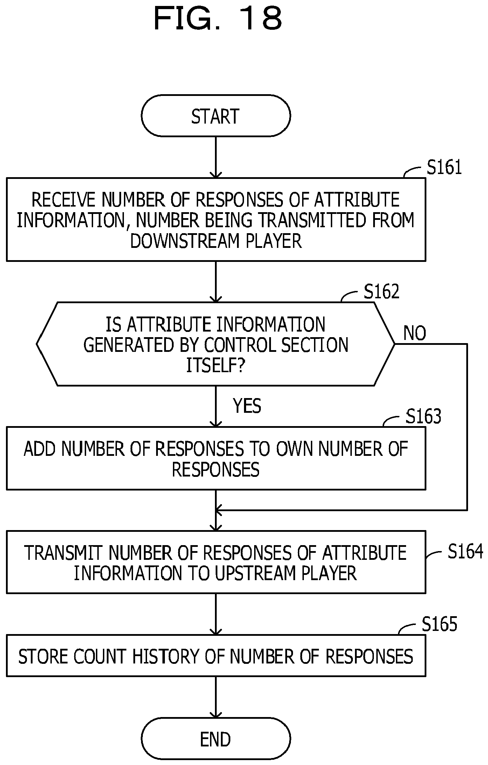

FIG. 18 is a flowchart illustrating an example of count control for the number of responses.

[Step S161] The control section 11 receives the number of responses of attribute information, the number being transmitted from a downstream player.

[Step S162] For the number of responses of the attribute information, the number being transmitted from the downstream player, the control section 11 determines whether or not the attribute information is generated by the control section 11 itself. When the attribute information is generated by the control section 11 itself, the processing proceeds to step S163. When the attribute information is not generated by the control section 11 itself, the processing proceeds to step S164.

[Step S163] The control section 11 cumulates a request frequency by adding the number of responses, the number being transmitted from the downstream player, to the own number of responses.

[Step S164] The control section 11 transmits the number of responses of the attribute information to an upstream player.

[Step S165] The control section 11 stores the added number of responses as a count history, and resets a counter of the number of responses after a certain counting.

As described above, according to the present technology, a downstream player may return a trace-back response, and a response delay time is shortened for often requested attribute information. In addition, because a downstream player returns a trace-back response, information traffic related to tracing back, the information traffic flowing on the network, is reduced and thus a network communication load may be reduced, and further a processing load on each player may be reduced.

The processing functions of the communicating device according to the present technology described above may be implemented by a computer. In this case, a program is provided which describes the processing contents of the functions to be possessed by the communicating device. The above-described processing functions are implemented on the computer by executing the program on the computer.

The program describing the processing contents may be recorded on a recording medium readable by the computer. The recording medium readable by the computer includes a magnetic storage device, an optical disk, a magneto-optical recording medium, a semiconductor memory, and the like. The magnetic storage device includes a hard disk device (HDD), a flexible disk (FD), a magnetic tape, and the like. The optical disk includes a DVD, a DVD-RAM, a CD-ROM/RW, and the like. The magneto-optical recording medium includes an MO (Magneto Optical disk) and the like.

In a case where the program is distributed, a portable recording medium such as a DVD, a CD-ROM, or the like on which the program is recorded, for example, is sold. In addition, it is possible to store the program in a storage device of a server computer in advance, and transfer the program from the server computer to another computer via a network.

The computer that executes the program, for example, stores the program recorded on the portable recording medium or the program transferred from the server computer in a storage device of the computer itself. Then, the computer reads the program from the storage device of the computer itself, and performs processing according to the program. Incidentally, the computer may also read the program directly from the portable recording medium, and perform the processing according to the program.

In addition, each time the program is transferred from the server computer coupled to the computer via the network, the computer may sequentially perform the processing according to the program received. In addition, at least a part of the above processing functions may be implemented by an electronic circuit such as a DSP, an ASIC, a PLD, or the like.

Embodiments have been illustrated above. However, the configurations of respective parts illustrated in the embodiments may be replaced with other configurations having similar functions. In addition, other arbitrary structures or processes may be added. Further, two or more arbitrary configurations (features) of the foregoing embodiments may be combined with each other.

## Claims

1. A communicating program of a communicating device communicating attribute information of a product manufactured so as to include a manufacturing process from a first location to a second location and from the second location to a third location, the communicating program causing a computer within the communicating device to execute a process, the process comprising:
when functioning as a first communicating device disposed at the first location, storing first attribute information of the product at the first location in a first storage section within the first communicating device, selecting, as high frequency attribute information from the first attribute information, attribute information having a request frequency equal to or higher than a threshold value, the request frequency being a frequency of requests from the second location or the third location, or attribute information that is storable within a range of capacity of an information transmitting medium and has a high request frequency, and writing the high frequency attribute information to the information transmitting medium attached to the product at the first location; and
when functioning as a second communicating device disposed at the second location, storing second attribute information of the product at the second location in a second storage section within the second communicating device, reading the high frequency attribute information written to the information transmitting medium attached to the product and storing the high frequency attribute information in the second storage section, extracting requested attribute information indicated in an attribute information obtainment request from the third location from the second attribute information or the high frequency attribute information and returning the requested attribute information in a case where the requested attribute information is stored in the second storage section at a time of reception of the attribute information obtainment request from the third location, and transferring the attribute information obtainment request to the first communicating device in a case where the requested attribute information indicated in the attribute information obtainment request is not stored in the second storage section at the time of reception of the attribute information obtainment request from the third location.

2. The communicating program according to claim 1, wherein
the process in the second communicating device counts the number of responses of each piece of the requested attribute information returned in response to the attribute information obtainment request and notifies the number of responses to the first communicating device, and the process in the first communicating device calculates the request frequency by adding the notified number of responses and an own number of responses with each other.

3. The communicating program according to claim 2, wherein
the process in the second communicating device compares a first number of responses of first high frequency attribute information and a second number of responses of second high frequency attribute information with each other when detecting a capacity shortage in the second storage section, and discards the second high frequency attribute information and stores the first high frequency attribute information in the second storage section when the second number of responses is smaller.

4. The communicating program according to claim 1, wherein
the process in the second communicating device notifies a storable capacity of the second storage section to the first communicating device when detecting a capacity shortage in the second storage section, and the process of the first communicating device selects the high frequency attribute information from the first attribute information based on the storable capacity.

5. A communicating device for communicating attribute information of a product manufactured so as to include a manufacturing process from a first location to a second location and from the second location to a third location, the communicating device comprising:
a storage section configured to store the attribute information; and
a control section configured to perform first communication control when disposed at the first location and perform second communication control when disposed at the second location
when performing the first communication control,
the control section storing first attribute information of the product at the first location in a storage section, selecting, as high frequency attribute information from the first attribute information, attribute information having a request frequency equal to or higher than a threshold value, the request frequency being a frequency of requests from the second location or the third location, or attribute information that is storable within a range of capacity of an information transmitting medium and has a high request frequency, and writing the high frequency attribute information to the information transmitting medium attached to the product at the first location, and
when performing the second communication control,
the control section storing second attribute information of the product at the second location in the storage section, reading the high frequency attribute information written to the information transmitting medium attached to the product and storing the high frequency attribute information in the storage section, extracting requested attribute information indicated in an attribute information obtainment request from the third location from the second attribute information or the high frequency attribute information and returning the requested attribute information in a case where the requested attribute information is stored in the storage section at a time of reception of the attribute information obtainment request from the third location, and transferring the attribute information obtainment request to a communicating device disposed at the first location in a case where the requested attribute information indicated in the attribute information obtainment request is not stored in the storage section at the time of reception of the attribute information obtainment request from the third location.

6. The communicating device according to claim 5, wherein
the process in the second communicating device counts the number of responses of each piece of the requested attribute information returned in response to the attribute information obtainment request and notifies the number of responses to the first communicating device, and the process in the first communicating device calculates the request frequency by adding the notified number of responses and an own number of responses with each other.

7. The communicating device according to claim 6, wherein
the process in the second communicating device compares a first number of responses of first high frequency attribute information and a second number of responses of second high frequency attribute information with each other when detecting a capacity shortage in the second storage section, and discards the second high frequency attribute information and stores the first high frequency attribute information in the second storage section when the second number of responses is smaller.

8. The communicating device according to claim 5, wherein
the process in the second communicating device notifies a storable capacity of the second storage section to the first communicating device when detecting a capacity shortage in the second storage section, and the process of the first communicating device selects the high frequency attribute information from the first attribute information based on the storable capacity.

9. A communicating method of a communicating device communicating attribute information of a product manufactured so as to include a manufacturing process from a first location to a second location and from the second location to a third location, the communicating method causing a computer within the communicating device to execute a process, the process comprising:
when functioning as a first communicating device disposed at the first location, storing first attribute information of the product at the first location in a first storage section within the first communicating device, selecting, as high frequency attribute information from the first attribute information, attribute information having a request frequency equal to or higher than a threshold value, the request frequency being a frequency of requests from the second location or the third location, or attribute information that is storable within a range of capacity of an information transmitting medium and has a high request frequency, and writing the high frequency attribute information to the information transmitting medium attached to the product at the first location; and
when functioning as a second communicating device disposed at the second location, storing second attribute information of the product at the second location in a second storage section within the second communicating device, reading the high frequency attribute information written to the information transmitting medium attached to the product and storing the high frequency attribute information in the second storage section, extracting requested attribute information indicated in an attribute information obtainment request from the third location from the second attribute information or the high frequency attribute information and returning the requested attribute information in a case where the requested attribute information is stored in the second storage section at a time of reception of the attribute information obtainment request from the third location, and transferring the attribute information obtainment request to the first communicating device in a case where the requested attribute information indicated in the attribute information obtainment request is not stored in the second storage section at the time of reception of the attribute information obtainment request from the third location.

10. The communicating method according to claim 9, wherein
the process in the second communicating device counts the number of responses of each piece of the requested attribute information returned in response to the attribute information obtainment request and notifies the number of responses to the first communicating device, and the process in the first communicating device calculates the request frequency by adding the notified number of responses and an own number of responses with each other.

11. The communicating method according to claim 10, wherein
the process in the second communicating device compares a first number of responses of first high frequency attribute information and a second number of responses of second high frequency attribute information with each other when detecting a capacity shortage in the second storage section, and discards the second high frequency attribute information and stores the first high frequency attribute information in the second storage section when the second number of responses is smaller.

12. The communicating method according to claim 9, wherein
the process in the second communicating device notifies a storable capacity of the second storage section to the first communicating device when detecting a capacity shortage in the second storage section, and the process of the first communicating device selects the high frequency attribute information from the first attribute information based on the storable capacity.
